# EUROPÄISCHE PATENTSCHRIFT

(11) **EP 3 174 691 B1**
(45) Veröffentlichungstag und Bekanntmachung des Hinweises auf die Patenterteilung: **08.12.2021**
(21) Anmeldenummer: 15753348.0
(22) Anmeldetag: 14.08.2015
(51) Int. Cl.: B29C 64/153, B29C 64/371, B29C 64/35, B08B 15/00, B33Y 10/00, B33Y 30/00, B33Y 50/02

(54) **VERFAHREN, VORRICHTUNG UND STEUEREINHEIT ZUM HERSTELLEN EINES DREIDIMENSIONALEN OBJEKTS**
METHOD, DEVICE, AND CONTROL UNIT FOR PRODUCING A THREE-DIMENSIONAL OBJECT
PROCÉDÉ, DISPOSITIF ET UNITÉ DE COMMANDE POUR FABRIQUER UN OBJET TRIDIMENSIONNEL

(30) Priorität: 05.09.2014 DE 102014217786
(43) Veröffentlichungstag der Anmeldung: 07.06.2017
(73) Patentinhaber: EOS GmbH Electro Optical Systems, 82152 Krailling (DE)
(72) Erfinder: SCHILLING, Alexander, 81377 München (DE); FEY, Georg, 80336 München (DE)
(74) Vertreter: Prüfer & Partner mbB Patentanwälte · Rechtsanwälte
(86) Internationale Anmeldenummer: PCT/EP2015/068795
(87) Internationale Veröffentlichungsnummer: WO 2016/034393

(56) Entgegenhaltungen:
- WO-A1-2005/025780
- DE-A1-102004 031 881
- DE-A1-102006 014 835

## Beschreibung

Die vorliegende Erfindung bezieht sich auf ein Verfahren und eine Vorrichtung zum Herstellen eines dreidimensionalen Objektes durch selektives schichtweises Verfestigen von Aufbaumaterial durch Energieeinbringung, sowie auf eine Steuereinheit für eine derartige Vorrichtung. Die vorliegende Erfindung bezieht sich auf ein Verfahren zum Steuern der Richtung einer Gasabsaugung in einer derartigen Vorrichtung.

Ein Verfahren dieser Art wird beispielsweise zum Rapid Prototyping, Rapid Tooling oder Rapid Manufacturing verwendet. Ein Beispiel eines solchen Verfahrens ist unter dem Namen "Selektives Lasersintern oder Laserschmelzen" bekannt. Dabei wird Pulver durch selektives Bestrahlen mit einem Laserstrahl selektiv verfestigt.

Bei dem Bestrahlen mit dem Laserstrahl entstehen je nach Art des verwendeten Materials, insbesondere beim Sintern oder Schmelzen von Metallpulver, Spratzer, Rauche, Schmauche, Dämpfe und/oder Gase, die sich in die Prozesskammer hinein ausbreiten. Diese können sich störend auf den Fertigungsprozess auswirken, beispielsweise indem sie die Ausbreitung des Laserstrahls stören, sich auf dem Einkoppelfenster für den Laserstrahl niederschlagen oder sich auf bzw. in der dem Laserstrahl zugewandten Oberfläche der Pulverschicht ablagern und beim Verfestigen nachfolgender Objektstellen störende Einschlüsse bilden, die die Qualität des fertiggestellten Objekts verringern oder das Aufbringen der nachfolgenden Schicht negativ beeinflussen.

Um solche Verschmutzungen aus der Prozesskammer zu entfernen, schlägt DE 198 53 947 C1 eine Vorrichtung vor, bei der ein gerichteter Schutzgasstrom durch die Prozesskammer geleitet wird. Ferner weist eine aus DE 10 2006 014 835 A1 bekannte Vorrichtung eine Schutzgasfördereinrichtung zum Durchleiten von Schutzgas durch den Prozessraum auf, wobei die Schutzgasfördereinrichtung Mittel zur Erzeugung und Aufrechterhaltung einer für von dem Baufeld ausgehenden Prozessrauch nahezu undurchdringlichen Trennzone in Form einer Schutzgasströmungsschicht zwischen dem Baufeld und der dem Baufeld oben gegenüberliegenden Seite des Prozessraumgehäuses aufweist.

Des Weiteren offenbart DE 10 2004 031 881 A1 eine Vorrichtung zum Absaugen und/oder Begasen eines Arbeitsbereichs einer Laserbearbeitungsmaschine. Die Vorrichtung in Form eines über dem Arbeitsbereich positionierbaren ringartigen Elements hat eine Mehrzahl von Absaugöffnungen an der Innenseite des Elements, sodass sich angehend von dessen Zentrum ein radial nach außen laufender Gasstrom oder Gasteppich ausbildet.

Auch in WO 2005/025780 wiest die Prozesskammer an einer Seite eine Einströmdüse zur Zuführung von Schutzgas oder Inertgas und an einer gegenüberliegenden Seite eine Absaugdüse oder Absaugöffnung auf, um während der Herstellung des Formkörpers eine laminare Strömung an Schutz- oder Inertgas zu erzeugen.

Lasersintervorrichtungen haben heutzutage relativ große Baufelder, auf denen die Pulverschicht aufgebracht und verfestigt wird, beispielsweise in der Größenordnung von 400 x 400 mm. Bei Baufeldern dieser Größe ist es möglich, dass größere und schwerere Partikel durch einen Gasstrom nicht vollständig über das gesamte Baufeld abtransportiert werden können, sondern sich während des Transports durch die Prozesskammer auf der Oberfläche der Pulverschicht absetzen. Solche Partikel bilden weiterhin beim Aufbringen und Verfestigen einer nachfolgenden Pulverschicht störende Einschlüsse, die die Qualität des fertiggestellten Objekts verringern.

Außerdem kann es vorkommen, dass sich auch in anderen Regionen des Innenraums von Lasersintervorrichtungen Partikel beispielsweise der oben erwähnten Art ablagern und diese Verschmutzungen mit der Zeit den Betrieb der Laservorrichtung beeinträchtigen. Derartige Ablagerungen entwickeln sich beispielsweise am oben erwähnten Einkoppelfenster.

Die Aufgabe der vorliegenden Erfindung besteht daher darin, ein verbessertes Verfahren und eine verbesserte Vorrichtung zum Herstellen eines dreidimensionalen Objekts bereitzustellen. Dabei soll insbesondere bevorzugt die Wirkung der Absaugung von störenden Partikeln verbessert werden. Eine solche Verbesserung kann beispielsweise darin bestehen, dass auch größere und schwerere Partikel, die beim Verfestigen des Aufbaumaterials entstehen, zuverlässig abgesaugt werden können, wodurch die Qualität des fertiggestellten Objekts zu verbessert bzw. der Betrieb der Vorrichtung vereinfacht werden kann. Eine weitere Verbesserung kann darin bestehen, dass eine effektivere Absaugwirkung von störenden Partikeln auch bei großen Baufeldern und/oder an von einem Baufeld weiter entfernten Bereichen des Innenraums der Vorrichtung erzielt wird.

Die Aufgabe wird gelöst durch ein Verfahren gemäß Anspruch 1 oder 6 bzw. durch eine Vorrichtung gemäß Anspruch 13. Weiterführend wird die Aufgabe auch gelöst durch ein Computerprogramm gemäß Anspruch 9, eine Steuereinheit gemäß Anspruch 10 oder einen Nachrüstsatz (verwendbar etwa zur Nachrüstung bestehender Vorrichtungen) gemäß Anspruch 12. Weiterbildungen der Erfindung sind jeweils in den Unteransprüchen angegeben. Dabei können die Verfahren jeweils sowohl untereinander als auch durch die untenstehenden bzw. in den Unteransprüchen ausgeführten Merkmale der Vorrichtungen weitergebildet sein oder umgekehrt. Außerdem kann die erfindungsgemäße Vorrichtung auch mit einer erfindungsgemäßen Steuereinheit oder einem erfindungsgemäßen Nachrüstsatz weitergebildet sein.

Das erfindungsgemäße Verfahren zum Steuern der Richtung einer Gasabsaugung wird in einer Vorrichtung zum Herstellen eines dreidimensionalen Objekts durch selektives schichtweises Verfestigen von Aufbaumaterial durchgeführt. Die Vorrichtung umfasst eine Beschichtungsvorrichtung zum Aufbringen einer Schicht des Aufbaumaterials auf ein Baufeld in einer Arbeitsebene, eine Verfestigungsvorrichtung zum selektiven Verfestigen des Aufbaumaterials in der aufgebrachten Schicht und zumindest zwei Gasdüsen, die am Rand des Baufelds angeordnet sind. Die Gasdüsen sind schaltbar in eine Funktion zum Absaugen von Gas aus der Vorrichtung und in einen funktionslosen Zustand und werden in Abhängigkeit von einem Betriebszustand der Vorrichtung geschaltet. Mit diesem Verfahren ist es möglich, die Richtung einer Gasabsaugung in der Vorrichtung so zu steuern, wie es für den jeweiligen Betriebszustand am günstigsten ist.

Vorzugsweise werden die Gasdüsen in Abhängigkeit von einer aktuellen Verfestigungsstelle geschaltet, d. h. der Betriebszustand der Vorrichtung bezieht sich (zumindest unter Anderem) auf die Position der aktuellen Verfestigungsstelle. Dadurch kann unter Anderem die Richtung einer Gasabsaugung abhängig von der Stelle gesteuert werden, an der die durch den Gasstrom zu beseitigenden Verunreinigungen entstehen.

Vorzugsweise wird eine Gasdüse, die der aktuellen Verfestigungsstelle näher liegt als eine andere Gasdüse, bevorzugt die Gasdüse, die der aktuellen Verfestigungsstelle am nächsten liegt, in die Funktion zum Absaugen von Gas geschaltet. Dadurch wird zum Beispiel eine möglichst geringe Wegstrecke für den Abtransport der Verunreinigungen sichergestellt, so dass auch schwerere Partikel zuverlässig abgesaugt werden können.

Vorzugsweise ist das Baufeld in vorbestimmte Bereiche unterteilt und die Gasdüsen werden abhängig davon geschaltet, in welchem dieser Bereiche sich die aktuelle Verfestigungsstelle befindet. Somit kann beispielsweise für die verschiedenen Positionen im Voraus festgelegt werden, welche Gasdüse als Absaugdüse dienen soll.

Vorzugsweise sind die Gasdüsen zusätzlich schaltbar in eine Funktion zum Zuführen von Gas in die Vorrichtung, und zumindest eine der Gasdüsen, die von der Gasdüse oder den Gasdüsen verschieden sind, die in die Funktion zum Absaugen von Gas geschaltet ist oder sind, wird in die Funktion zum Zuführen von Gas geschaltet. Dies bedeutet, dass diese zumindest eine Gasdüse zwischen einer Funktion als Absaugdüse und einer Funktion zum Zuführen von Gas (also als "Einblasdüse") geschaltet werden kann. Zeitlich zwischen diesen beiden Schaltzuständen befindet sich der Schaltzustand, in dem die jeweilige Gasdüse zumindest ganz kurzzeitig im funktionslosen Zustand geschaltet ist. Dadurch kann unter Anderem auch die Richtung der Gaszufuhr so gesteuert werden, wie es für den jeweiligen Betriebszustand am günstigsten ist.

Das erfindungsgemäße Verfahren zum Herstellen eines dreidimensionalen Objekts durch schichtweises Aufbringen und selektives Verfestigen eines Aufbaumaterials enthält die Schritte Aufbringen einer Schicht eines Aufbaumaterials auf ein Baufeld in einer Arbeitsebene, selektives Verfestigen der Schicht des Aufbaumaterials an Stellen der jeweiligen Schicht, die einem Querschnitt des herzustellenden Objekts entsprechen, und Wiederholen dieser beiden Schritte, bis das Objekt fertiggestellt ist. Dabei wird während der Herstellung des Objekts ein Gas durch zumindest eine von zwei Gasdüsen abgesaugt, die am Rand des Baufelds angeordnet sind, und ein Steuern der Richtung der Gasabsaugung erfolgt wie voranstehend beschrieben. Dadurch werden beispielsweise Verunreinigungen zuverlässig abgesaugt, ohne den Aufbau des Objekts zu stören, wodurch die Qualität des fertiggestellten Objekts verbessert werden kann.

Vorzugsweise wird eine aktuelle Verfestigungsstelle in Abhängigkeit von einem Schaltzustand der Gasdüsen gesteuert. Dadurch kann zum Beispiel vermieden werden, dass die Gasdüsen übermäßig häufig geschalten werden müssen, und somit die Herstellungsdauer eines Objekts verringert werden.

Vorzugsweise werden die Gasdüsen während des selektiven Verfestigens einer Schicht geschaltet. Dadurch ist es möglich, die Richtung der Gasabsaugung während des selektiven Verfestigens einer Schicht zu ändern.

Das erfindungsgemäße Computerprogramm ist in eine programmierbare Steuereinheit ladbar, die in der oben beschriebenen Vorrichtung zum Herstellen eines dreidimensionalen Objekts enthalten ist, und enthält Programmcodemittel, um alle Schritte eines der oben genannten Verfahren auszuführen, wenn es auf der Steuereinheit ausgeführt wird. Dadurch kann die Steuerung der Gasdüsen in flexibler Weise programmgesteuert erfolgen.

Die erfindungsgemäße Steuereinheit für eine Vorrichtung, wie sie oben beschrieben ist, ist dazu ausgebildet, die Gasdüsen in Abhängigkeit von einem Betriebszustand der Vorrichtung zu schalten um ein oben genanntes Verfahren zum Steuern der Richtung der Gasabsaugung durchzuführen. Dadurch ermöglicht es die Steuereinheit der Vorrichtung, das erfindungsgemäße Verfahren zum Steuern der Richtung einer Gasabsaugung durchzuführen.

Vorzugsweise ist die Steuereinheit zusätzlich ausgebildet zum Steuern oder Regeln der Verfestigungsvorrichtung zum Festlegen der Verfestigungsstelle. Dadurch wird das Schalten der Gasdüsen durch dieselbe Einheit gesteuert wie das Festlegen der Verfestigungsstelle, wodurch unter Anderem beides einfacher aufeinander abgestimmt werden kann.

Der erfindungsgemäße Nachrüstsatz für eine Vorrichtung, wie sie oben beschrieben ist, umfasst zumindest zwei Gasdüsen und eine Steuereinheit, wie sie oben beschrieben ist. Mit diesem Nachrüstsatz können bestehende Anlagen so nachgerüstet werden, dass sie das erfindungsgemäße Verfahren zum Steuern der Richtung einer Gasabsaugung durchführen können.

Die erfindungsgemäße Vorrichtung zum Herstellen eines dreidimensionalen Objekts durch selektives schichtweises Verfestigen von Aufbaumaterial enthält eine Beschichtungsvorrichtung zum Aufbringen einer Schicht des Aufbaumaterials auf ein Baufeld in einer Arbeitsebene, eine Verfestigungsvorrichtung zum selektiven Verfestigen des Aufbaumaterials in der aufgebrachten Schicht und zumindest zwei Gasdüsen, die am Rand des Baufelds angeordnet sind. Die Gasdüsen sind schaltbar in eine Funktion zum Absaugen von Gas aus der Vorrichtung und in einen funktionslosen Zustand. Die Vorrichtung weist weiter eine oben beschriebene Steuereinheit auf, die die Gasdüsen in Abhängigkeit von einem Betriebszustand der Vorrichtung schaltet. Damit ist die Vorrichtung so ausgebildet, dass sie das erfindungsgemäße Verfahren zum Steuern der Richtung einer Gasabsaugung durchführen kann.

Vorzugsweise sind die Gasdüsen zusätzlich schaltbar in eine Funktion zum Zuführen von Gas in die Vorrichtung. Damit ist die Vorrichtung so ausgebildet, dass auch die Richtung der Gaszufuhr so gesteuert werden kann, wie es für den jeweiligen Betriebszustand am günstigsten ist.

Vorzugsweise weist das Baufeld in der Arbeitsebene eine rechteckige Form auf und es sind zwei Gasdüsen bereitgestellt, die an zwei einander gegenüberliegenden Seiten des Rechtecks angeordnet sind, oder es sind vier Gasdüsen bereitgestellt, von denen jede an einer Seite des Rechtecks angeordnet ist. Dadurch lässt sich etwa bei einer üblichen Form des Baufelds mit einer geringen Anzahl umschaltbarer Düsen eine flexible Einstellung der Gasstromrichtung erzielen.

Vorzugsweise sind die Gasdüsen jeweils so ausgebildet und/oder ansteuerbar, dass eine Geschwindigkeit eines durch sie hervorgerufenen Gasstroms auf der Höhe der Arbeitsebene am geringsten ist. Dadurch kann beispielsweise sichergestellt werden, dass an der Pulveroberfläche kein Pulver weggeblasen bzw. abgesaugt wird, und/oder auch, dass Verunreinigungen oberhalb der Pulveroberfläche zuverlässig abgesaugt werden können.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen der vorliegenden Erfindung geeignet ist.
- Fig. 2: ist eine schematische Draufsicht auf ein Ausführungsbeispiel eines Baufelds mit rings herum angeordneten Gasdüsen, das zum Durchführen der vorliegenden Erfindung geeignet ist.
- Fig. 3: und 4 sind schematische Draufsichten auf das in Fig. 2 gezeigte Baufeld, die zur Erläuterung einer ersten Ausführungsform des erfindungsgemäßen Verfahrens dienen.
- Fig. 5: ist eine schematische Draufsicht auf das in Fig. 2 gezeigte Baufeld, die zur Erläuterung einer zweiten Ausführungsform des erfindungsgemäßen Verfahrens dient.
- Fig. 6: und 7 sind schematische Draufsichten auf das in Fig. 2 gezeigte Baufeld, die zur Erläuterung einer dritten Ausführungsform des erfindungsgemäßen Verfahrens dienen.
- Fig. 8: ist eine schematische Ansicht einer Geschwindigkeitsverteilung eines Gasstroms oberhalb einer Arbeitsebene.

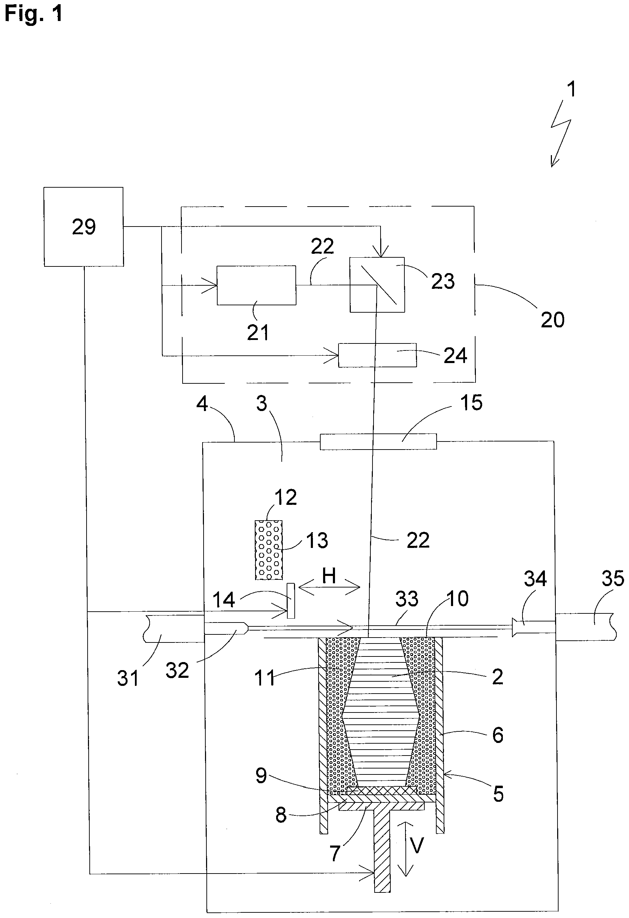

Im Folgenden wird mit Bezug auf Fig. 1 eine Vorrichtung 1 gemäß einer Ausführungsform der vorliegenden Erfindung beschrieben.

Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. An ihrer Oberseite enthält die Wandung 4 der Prozesskammer 3 ein Einkoppelfenster 15 für die zum Verfestigen des Pulvers 13 dienende Strahlung 22.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Zum Erzeugen eines (bevorzugt laminaren) Gasstroms 33 in der Prozesskammer 3 enthält die Lasersintervorrichtung 1 ferner einen Gaszuführkanal 31, eine Gaseinlassdüse 32, eine Gasabsaugdüse 34 und einen Gasabführkanal 35. Auch die Gaszufuhr und - abfuhr kann von der Steuereinheit 29 gesteuert sein. Das aus der Prozesskammer 3 abgesaugte Gas kann einer (nicht gezeigten) Filtervorrichtung zugeführt werden, und das gefilterte Gas kann über den Gaszuführkanal 31 wieder der Prozesskammer 3 zugeführt werden, wodurch ein Umluftsystem mit einem geschlossenen Gaskreislauf gebildet wird. Statt lediglich einer Gaseinlassdüse 32 und einer Gasabsaugdüse 34 können jeweils auch mehrere Düsen vorgesehen sein.

Im Betrieb wird zunächst zum Aufbringen einer Pulverschicht der Träger 7 um eine Höhe abgesenkt, die der gewünschten Schichtdicke entspricht. Unter Verwendung des Beschichters 14 wird nun eine Schicht des pulverförmigen Aufbaumaterials 13 aufgetragen. Die Aufbringung erfolgt zumindest über den gesamten Querschnitt des herzustellenden Objekts 2, vorzugsweise über das gesamte Baufeld, also den Bereich der Arbeitsebene 10, der innerhalb der oberen Öffnung des Behälters 5 liegt. Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

Während des Aufbaus des Objekts 2 wird ein Gas, vorzugsweise ein Schutzgas, beispielsweise Argon und/oder Stickstoff, durch die Gaseinlassdüse 32 in die Prozesskammer eingeleitet und durch die Gasabsaugdüse 34 wieder aus ihr abgesaugt.

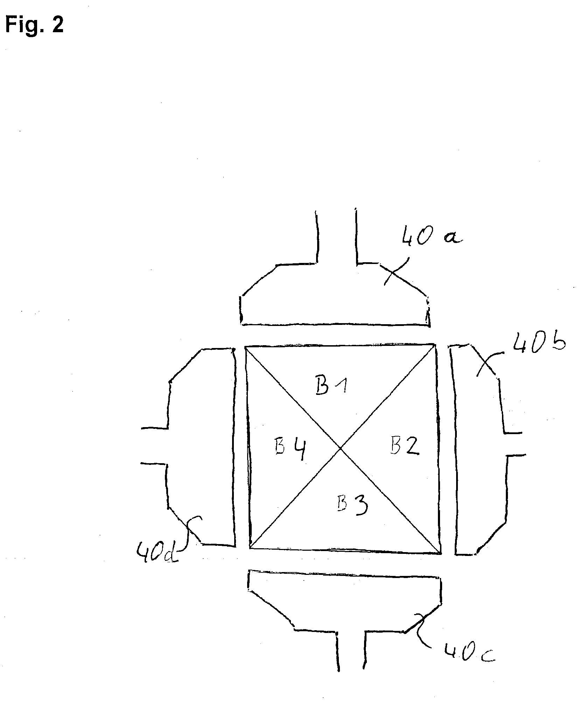

Fig. 2 zeigt eine schematische Draufsicht auf ein Ausführungsbeispiel eines Baufelds mit rings herum angeordneten Gasdüsen, das zum Durchführen der vorliegenden Erfindung geeignet ist. In diesem Ausführungsbeispiel ist das Baufeld annähernd quadratisch, und an jeder Kante des Quadrats ist eine Gasdüse 40 angeordnet, also insgesamt vier Gasdüsen 40a-40d, die so ausgebildet sind, dass sie sowohl als Gaseinlassdüse als auch als Gasabsaugdüse dienen können. In einer Richtung parallel zu der jeweiligen Seite des quadratischen Baufelds hat jede Gasdüse 40 eine Breite, die sich annähernd über die gesamte Breite bzw.

Länge des Baufelds erstreckt. Auf der jeweils der Kante des Quadrats zugewandten Seite hat jede Gasdüse 40 eine oder mehrere (in der Draufsicht nicht gezeigte) Öffnung(en), durch die das Gas aus der Düse ausströmen oder in sie eingesaugt werden kann.

Ob eine Gasdüse 40 als Gaseinlassdüse oder als Gasabsaugdüse betrieben wird oder inaktiv ist, wird in Abhängigkeit von der Position der aktuellen Verfestigungsstelle auf dem Baufeld festgelegt. Als aktuelle Verfestigungsstelle wird dabei die Stelle in der Arbeitsebene 10 bezeichnet, die aktuell dem Verfestigungsprozess unterzogen wird, an der also gerade der Laserstrahl auf das Pulver auftritt, es erhitzt und somit verfestigt. Die aktuelle Verfestigungsstelle ist somit auch die Stelle, an der gerade Verunreinigungen wie Spratzer, Rauche, Schmauche, Dämpfe und/oder Gase entstehen.

Bevorzugt wird dabei der Betrieb der Gasdüsen 40 als Gaseinlassdüsen oder als Gasabsaugdüsen so gesteuert, dass ein Abstand zwischen der Verfestigungsstelle und der Gasabsaugdüse möglichst gering ist, dass also die Absaugung möglichst nahe an der Verfestigungsstelle durchgeführt wird. Dazu wird beispielsweise eine Gasdüse (40), die der aktuellen Verfestigungsstelle näher liegt als eine andere Gasdüse, bevorzugt die Gasdüse (40), die der aktuellen Verfestigungsstelle am nächsten liegt, in die Funktion zum Absaugen von Gas geschaltet. Diese Steuerung kann beispielsweise von der Steuereinheit 29 durchgeführt werden, die die Belichtungseinheit 20 steuert und damit die aktuelle Verfestigungsstelle festlegt.

Das Umschalten der Gasdüsen 40 als Gaseinlassdüsen oder als Gasabsaugdüsen, also ihre Verbindung mit dem Gaszuführkanal 31 oder mit dem Gasabführkanal 35, kann mittels pneumatischer Quetschventile oder durch Sperrventile durchgeführt werden. Einzelne Gasdüsen 40 können aber auch inaktiv sein, d.h. weder mit dem Gaszuführkanal 31 noch mit dem Gasabführkanal 35 verbunden sein.

Die Gaszufuhr und Gasabsaugung erfolgt dabei mit einer solchen Intensität, dass ein Optimum an Absaugeffekt auf dem Baufeld erzeugt wird. Ein solches Optimum ist dann erreicht, wenn möglichst im Wesentlichen alle störenden Partikel von der Absaugdüse abgesaugt werden und gleichzeitig keine Störeffekte, etwa durch Gasverwirbelungen an der Pulveroberfläche entstehen.

In einer ersten Ausführungsform ist das quadratische Baufeld wie in Fig. 2 gezeigt durch seine zwei Diagonalen in vier dreieckige Bereiche B1-B4 unterteilt, die jeweils von einer Kante des Quadrats bis zu dessen Mitte gehen. Die Gaszufuhr und die Gasabsaugung wird abhängig davon gesteuert, in welchem dieser Bereiche sich die aktuelle Verfestigungsstelle befindet.

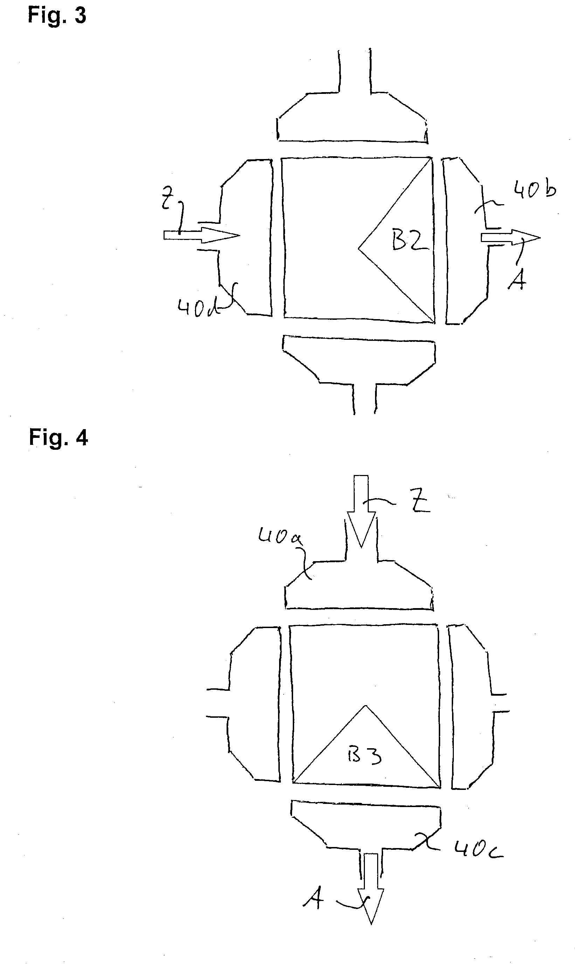

Als Beispiel zeigt Fig. 3 einen Fall, in dem sich die aktuelle Verfestigungsstelle in dem Dreiecksbereich B2 befindet, der an die (in der Figur) rechts liegende Kante des Baufelds angrenzt. In diesem Fall ist die Gasdüse 40, die am nächsten an der Verfestigungsstelle liegt, die Gasdüse 40b. Daher erfolgt in diesem Fall die Gaszufuhr (Pfeil Z) über die Gasdüse 40d und die Gasabsaugung (Pfeil A) über die Gasdüse 40b.

Als weiteres Beispiel zeigt Fig. 4 einen Fall, in dem sich die aktuelle Verfestigungsstelle in dem Dreiecksbereich B3 befindet, der an die (in der Figur) unten liegende Kante des Baufelds angrenzt. In diesem Fall ist die Gasdüse 40, die am nächsten an der Verfestigungsstelle liegt, die Gasdüse 40c. Daher erfolgt in diesem Fall die Gaszufuhr (Pfeil Z) über die Gasdüse 40a und die Gasabsaugung (Pfeil A) über die Gasdüse 40c.

Analog wird verfahren, wenn sich die aktuelle Verfestigungsstelle in dem Dreiecksbereich B1 oder B4 befindet, wobei die jeweiligen Gasstromrichtungen umgekehrt wie in den beiden oben beschriebenen Fällen sind.

Im Vergleich zu einem Gasstrom, der mit konstanter Richtung durch die ganze Prozesskammer verläuft, wird mit dieser Umschaltung der Gasstromrichtung erreicht, dass die abzusaugenden Spratzer, Rauche, Schmauche, Dämpfe und/oder Gase maximal die halbe Länge der Prozesskammer durchlaufen müssen. Daher können durch die Umschaltung der Gasstromrichtung auch größere und schwerere Partikel, die sich sonst während des Transports durch die Prozesskammer auf der Pulverschicht absetzen würden, wirkungsvoll aus dem Prozessraum abgesaugt werden. Um solche Partikel mit einem Gasstrom, der durch die ganze Prozesskammer verläuft, abtransportieren zu können, müssten Durchfluss und/oder Geschwindigkeit des Gasstroms erhöht werden, was die Oberfläche der aufgebrachten Pulverschicht stören könnte. Durch die Umschaltung der Gasstromrichtung in Abhängigkeit von der aktuellen Verfestigungsstelle können diese Partikel bereits mit kleinerem Durchfluss und/oder kleinerer Geschwindigkeit des Gasstroms wirkungsvoll abgesaugt werden, wodurch eine Störung der Oberfläche der aufgebrachten Pulverschicht vermieden wird.

In der ersten Ausführungsform wird jeweils die Gasdüse 40, die der aktuellen Verfestigungsstelle am nächsten liegt, als Gasabsaugdüse 34 verwendet, und die ihr gegenüberliegende Gasdüse 40 wird als Gaseinlassdüse 32 verwendet. Die beiden anderen Gasdüsen (in Querrichtung zu dem Gasstrom) bleiben inaktiv.

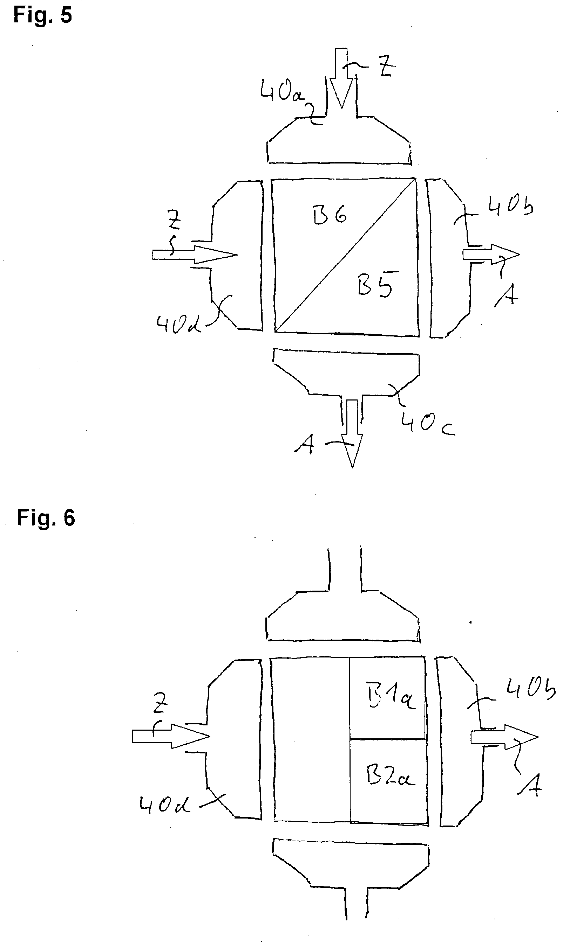

Fig. 5 ist eine schematische Draufsicht auf das in Fig. 2 gezeigte Baufeld, die zur Erläuterung einer zweiten Ausführungsform des erfindungsgemäßen Verfahrens dient, bei der immer alle vier Gasdüsen 40 zum Einsatz kommen.

In dieser Ausführungsform ist das Baufeld durch eine seiner Diagonalen in zwei dreieckige Bereiche B5-B6 unterteilt. Auch hier wird die Gaszufuhr und die Gasabsaugung abhängig davon gesteuert, in welchem dieser Bereiche sich die aktuelle Verfestigungsstelle befindet.

Als Beispiel zeigt Fig. 5 einen Fall, in dem sich die aktuelle Verfestigungsstelle in dem Dreiecksbereich B5 befindet, der an die beiden (in der Figur) rechts und unten liegenden Kanten des Baufelds angrenzt. In diesem Fall sind die Gasdüsen 40, die am nächsten an der Verfestigungsstelle liegen, die Gasdüsen 40b und 40c. Daher erfolgt in diesem Fall die Gaszufuhr (Pfeil Z) über die Gasdüsen 40d und 40a und die Gasabsaugung (Pfeil A) über die Gasdüsen 40b und 40c.

Analog wird verfahren, wenn sich die aktuelle Verfestigungsstelle in dem Dreiecksbereich B6 befindet, wobei die jeweiligen Gasstromrichtungen umgekehrt wie in dem oben beschriebenen Fall sind.

Alternativ kann auch die andere Diagonale des Quadrats zum Unterteilen des Baufelds in zwei Dreiecke verwendet werden.

Als weitere Alternative werden keine dreieckigen Bereiche verwendet, sondern das Baufeld kann beispielsweise in vier gleiche Teilquadrate unterteilt sein. Auch hierbei erfolgt die Gaszufuhr über die zwei Gasdüsen 40, die an den beiden Kanten des Baufelds liegen, an die das Teilquadrat mit der aktuellen Verfestigungsstelle angrenzt, und die Gasabfuhr erfolgt über die beiden gegenüberliegenden Gasdüsen 40.

Die erste und die zweite Ausführungsform können aber auch miteinander kombiniert werden. So kann z.B., wenn die Verfestigungsstelle aus dem in Fig. 2 gezeigten Dreiecksbereich B2 in den Dreiecksbereich B3 wandert, zunächst wie in Fig. 3 gezeigt die Gaszufuhr (Pfeil Z) über die Gasdüse 40d und die Gasabsaugung (Pfeil A) über die Gasdüse 40b erfolgen. Wenn sich die Verfestigungsstelle der Grenze zwischen den Bereichen B2 und B3 nähert, kann zusätzlich die Gaszufuhr (Pfeil Z) über die Gasdüse 40a und die Gasabsaugung (Pfeil A) über die Gasdüse 40c hinzugeschaltet werden, so dass sich der in Fig. 5 gezeigte Zustand ergibt. Wenn die Verfestigungsstelle dann in den Bereich B3 eingetreten ist und sich von der Grenze zwischen den Bereichen B2 und B3 entfernt, können die Gasdüsen 40B und 40D deaktiviert werden, so dass sich der in Fig. 4 gezeigte Zustand ergibt.

Bei den obigen Ausführungformen wurde immer nur eine Verfestigungsstelle berücksichtigt. Es gibt jedoch auch Lasersinteranlagen mit Mehrkopfsystem, bei der das zumindest teilweise Aufschmelzen des Pulvers gleichzeitig an mehreren Stellen durchgeführt werden kann.

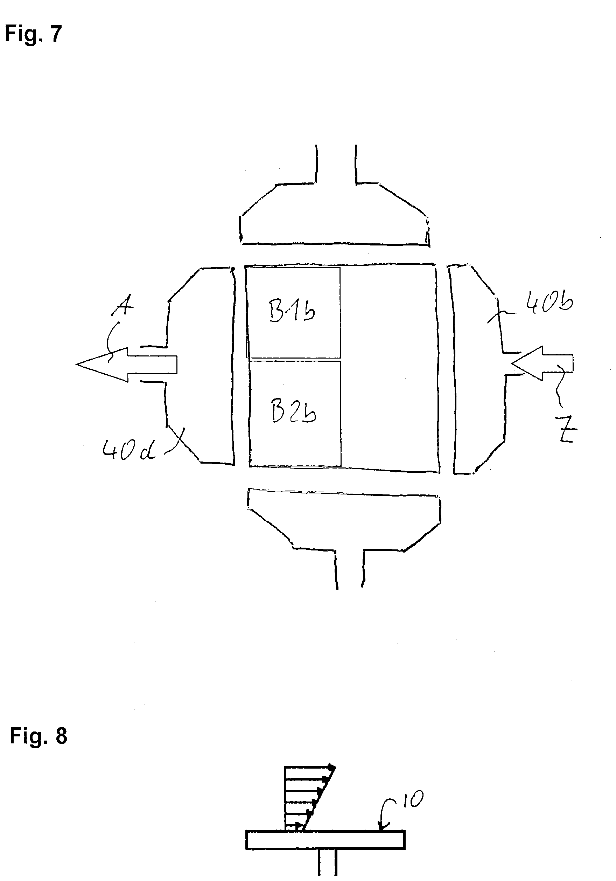

Fig. 6 und 7 sind schematische Draufsichten auf das in Fig. 2 gezeigte Baufeld, die zur Erläuterung einer dritten Ausführungsform des erfindungsgemäßen Verfahrens dienen, bei der ein Zweikopfsystem verwendet wird.

Zunächst verfestigt der erste Kopf das Pulver in dem in Fig. 6 gezeigten Bereich B1a des Baufelds, und gleichzeitig verfestigt der zweite Kopf das Pulver in dem Bereich B2a. In diesem Fall erfolgt die Gaszufuhr (Pfeil Z) über die Gasdüse 40d und die Gasabsaugung (Pfeil A) über die Gasdüse 40b, die den kürzesten Abstand zu beiden Bereichen hat.

Anschließend verfestigt der erste Kopf das Pulver in dem in Fig. 7 gezeigten Bereich B1b des Baufelds, und gleichzeitig verfestigt der zweite Kopf das Pulver in dem Bereich B2b. In diesem Fall erfolgt die Gaszufuhr (Pfeil Z) über die Gasdüse 40b und die Gasabsaugung (Pfeil A) über die Gasdüse 40d, die den kürzesten Abstand zu beiden Bereichen hat.

Bei allen oben beschriebenen Ausführungsformen können die Gasdüsen 40 jeweils so gebildet sein, dass die Geschwindigkeit des Gasstroms von der Höhe über der Arbeitsebene abhängt.

Fig. 8 ist eine schematische Ansicht einer bevorzugten Geschwindigkeitsverteilung eines Gasstroms oberhalb der Arbeitsebene 10. Nahe der Pulveroberfläche ist die Geschwindigkeit niedrig, damit kein Pulver weggeblasen bzw. abgesaugt wird. Das ist besonders wichtig bei der Verwendung von Leichtmetallpulvern wie z.B. Aluminium. Nach oben hin, also senkrecht von der Arbeitsebene weg, nimmt die Geschwindigkeit zu, so dass beispielsweise Spratzer zuverlässig abgesaugt werden können. Eine solche Geschwindigkeitsverteilung kann beispielsweise dadurch verwirklicht werden, dass die Gasdüsen 40 senkrecht übereinander liegende Kanäle enthalten, die voneinander verschieden gebildet sind und/oder unterschiedlich mit Gasüberdruck bzw. -unterdruck beaufschlagt werden können.

Die Gasdüsen können auch nicht nur abhängig von der Position der aktuellen Verfestigungsstelle gesteuert werden, sondern auch von der Änderung der Position, beispielsweise abhängig davon, ob sich die Verfestigungsstelle einer Grenze zwischen zwei Bereichen des Baufelds nähert.

Allgemein können die Gasdüsen in Abhängigkeit von einem beliebigen Betriebszustand der Vorrichtung 1 geschaltet werden. Unter "Betriebszustand" ist dabei sowohl der aktuelle Zustand der Vorrichtung 1 zu verstehen als auch möglicherweise ihr früherer und/oder zukünftiger (ganz oder teilweise (vor-) programmierter) Zustand. Das heißt, dass die Gasdüsen beispielsweise auch in Abhängigkeit davon geschaltet werden können, was zuvor in der Vorrichtung geschehen ist oder was (insbesondere in derselben zu belichtenden Schicht) demnächst geschieht. Dies kann im Rahmen einer (insbesondere ganz oder teilweise vorprogrammierten) sogenannten Belichtungsstrategie für die Herstellung des Objekts vordefiniert, nämlich hinterlegt, sein. Der Betriebszustand bezieht sich neben der (programmierten) Abfolge der Verfestigungsstellen also grundsätzlich auch auf andere Zustände innerhalb der Vorrichtung, etwa ein erkanntes Strömungsprofil, Unregelmäßigkeiten im Betriebsablauf u.v.m.

Da eine Änderung des Auftreffpunkts des Laserstrahls und damit der aktuellen Verfestigungsstelle schneller durchführbar ist als eine Änderung der Gasstromrichtung durch Schalten der Gasdüsen, ist es sinnvoll, den Laser so zu steuern, dass zunächst alle Stellen verfestigt werden, die innerhalb eines Bereichs des Baufelds liegen, in dem dieselben Gasdüsen als Einlass- bzw. Absaugdüsen verwendet wird, bevor Stellen in einem anderen Bereich verfestigt werden. Diese Vorgehensweise, die oben in der dritten Ausführungsform mit Bezug auf eine Mehrkopfvorrichtung beschrieben wurde, ist auch bei einem einzelnen Laserkopf sinnvoll, um ein unnötig häufiges Schalten der Gasdüsen zu vermeiden und somit die Herstellungsdauer eines Objekts zu verringern.

Statt vier Düsen können auch nur zwei Düsen bereitgestellt sein, beispielsweise an einander gegenüberliegenden Seiten des Baufelds. Die Gaszufuhr und -absaugung erfolgt dann entsprechend den in Fig. 6 und 7 gezeigten Zuständen (Gasdüsen 40b und 40d). Es kann aber auch jede beliebige andere Anzahl an Gasdüsen vorgesehen sein.

Das Baufeld muss auch nicht quadratisch sein, sondern kann beispielsweise allgemein rechteckig, rund, polygonförmig sein oder eine beliebige andere Form haben.

Die an den Seiten des Baufelds angeordneten Gasdüsen müssen nicht als Gaseinlassdüsen dienen können. Es reicht, wenn sie als Gasabsaugdüsen ein- und abschaltbar sind. Die Gaszufuhr kann dann beispielsweise von oben erfolgen.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines Aufbaumaterials angewendet werden, bei denen das Absaugen eines Gases, insbesondere eines Schutzgases verwendet wird.

Der Laser kann beispielsweise einen Gas- oder Festkörperlaser oder jede andere Art von Laser umfassen. Allgemein kann jede Einrichtung verwendet werden, mit der Energie selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das Herstellen eines Objekts mittels schichtweisen Auftragens und selektiven Verfestigens eines Aufbaumaterials unabhängig von der Art und Weise, in der das Aufbaumaterial verfestigt wird.

Bei Verwendung eines Pulvers als Aufbaumaterial können verschiedene Arten von Pulver verwendet werden, insbesondere Metallpulver, Kunststoffpulver, Keramikpulver, Sand, gefüllte oder gemischte Pulver. Als Schutzgas wird je nach verwendetem Aufbaumaterial ein Gas verwendet, das mit dem Aufbaumaterial im Wesentlichen keine chemische Reaktion eingeht, beispielsweise bei Kunststoffpulver vorzugsweise Stickstoff oder bei Metallpulver vorzugsweise Argon und/oder Stickstoff.

## Patentansprüche

1. Verfahren zum Steuern der Richtung einer Gasabsaugung in einer Vorrichtung (1) zum Herstellen eines dreidimensionalen Objekts (2) durch selektives schichtweises Verfestigen von Aufbaumaterial (13), wobei die Vorrichtung (1) umfasst:
eine Beschichtungsvorrichtung (12-14) zum Aufbringen einer Schicht des Aufbaumaterials (13) auf ein Baufeld in einer Arbeitsebene (10),
eine Verfestigungsvorrichtung (20) zum selektiven Verfestigen des Aufbaumaterials (13) in der aufgebrachten Schicht und
zumindest zwei Gasdüsen (40), die am Rand des Baufelds angeordnet sind,
wobei die Gasdüsen (40) schaltbar sind in eine Funktion zum Absaugen von Gas aus der Vorrichtung (1) und in einen funktionslosen Zustand und
die Gasdüsen (40) in Abhängigkeit von einem Betriebszustand der Vorrichtung (1) geschaltet werden.

2. Verfahren gemäß Anspruch 1, bei dem die Gasdüsen (40) in Abhängigkeit von einer aktuellen Verfestigungsstelle geschaltet werden.

3. Verfahren gemäß Anspruch 2, bei dem
eine Gasdüse (40), die der aktuellen Verfestigungsstelle näher liegt als eine andere Gasdüse, bevorzugt die Gasdüse (40), die der aktuellen Verfestigungsstelle am nächsten liegt, in die Funktion zum Absaugen von Gas geschaltet wird.

4. Verfahren gemäß Anspruch 2 oder 3, bei dem
das Baufeld in vorbestimmte Bereiche (B1-B4; B5, B6; B1a, B1b, B2a, B2b) unterteilt ist und
die Gasdüsen (40) abhängig davon geschaltet werden, in welchem dieser Bereiche sich die aktuelle Verfestigungsstelle befindet.

5. Verfahren gemäß einem der Ansprüche Anspruch 1 bis 4, bei dem
die Gasdüsen (40) zusätzlich schaltbar sind in eine Funktion zum Zuführen von Gas in die Vorrichtung (1) und
zumindest eine der Gasdüsen (40), die von der Gasdüse oder den Gasdüsen verschieden sind, die in die Funktion zum Absaugen von Gas geschaltet ist oder sind, in die Funktion zum Zuführen von Gas geschaltet wird.

6. Verfahren zum Herstellen eines dreidimensionalen Objekts (2) durch schichtweises Aufbringen und selektives Verfestigen eines Aufbaumaterials (13) mit den Schritten:
a) Aufbringen einer Schicht eines Aufbaumaterials (13) auf ein Baufeld in einer Arbeitsebene (10),
b) selektives Verfestigen der Schicht des Aufbaumaterials (13) an Stellen der jeweiligen Schicht, die einem Querschnitt des herzustellenden Objekts (2) entsprechen, und
c) Wiederholen der Schritte a) und b), bis das Objekt (2) fertiggestellt ist,
wobei während der Herstellung des Objekts ein Gas durch zumindest eine von zwei Gasdüsen (40) abgesaugt wird, die am Rand des Baufelds angeordnet sind, und
ein Steuern der Richtung der Gasabsaugung mit einem Verfahren gemäß einem der Ansprüche 1 bis 5 erfolgt.

7. Verfahren gemäß Anspruch 6, bei dem
eine aktuelle Verfestigungsstelle in Abhängigkeit von einem Schaltzustand der Gasdüsen (40) gesteuert wird.

8. Verfahren gemäß einem der Ansprüche 1 bis 7, wobei die Gasdüsen während des selektiven Verfestigens einer Schicht geschaltet werden.

9. Computerprogramm, das in eine programmierbare Steuereinheit (29) ladbar ist, mit Programmcodemitteln, um alle Schritte eines Verfahrens gemäß einem der Ansprüche 1 bis 5 auszuführen, wenn das Computerprogramm auf der Steuereinheit (29) ausgeführt wird.

10. Steuereinheit (29) für eine Vorrichtung (1) zum Herstellen eines dreidimensionalen Objekts (2) durch selektives schichtweises Verfestigen von Aufbaumaterial (13), wobei die Vorrichtung umfasst:
eine Beschichtungsvorrichtung (12-14) zum Aufbringen einer Schicht des Aufbaumaterials (13) auf ein Baufeld in einer Arbeitsebene (10),
eine Verfestigungsvorrichtung (20) zum selektiven Verfestigen des Aufbaumaterials (13) in der aufgebrachten Schicht und
zumindest zwei Gasdüsen (40), die am Rand des Baufelds angeordnet sind,
wobei die Gasdüsen (40) schaltbar sind in eine Funktion zum Absaugen von Gas aus der Vorrichtung (1) und in einen funktionslosen Zustand und
die Steuereinheit (29) ausgebildet ist, die Gasdüsen (40) in Abhängigkeit von einem Betriebszustand der Vorrichtung (1) zu schalten, um ein Verfahren zum Steuern der Richtung der Gasabsaugung gemäß einem der Ansprüche 1 bis 5 durchzuführen.

11. Steuereinheit (29) gemäß Anspruch 10, die zusätzlich zum Steuern oder Regeln der Verfestigungsvorrichtung (20) zum Festlegen der Verfestigungsstelle ausgebildet ist.

12. Nachrüstsatz für eine Vorrichtung (1) zum Herstellen eines dreidimensionalen Objekts (2) durch selektives schichtweises Verfestigen von Aufbaumaterial (13) wobei der Nachrüstsatz umfasst:
zumindest zwei Gasdüsen (40) und
eine Steuereinheit (29) gemäß Anspruch 10 oder 11.

13. Vorrichtung (1) zum Herstellen eines dreidimensionalen Objekts (2) durch selektives schichtweises Verfestigen von Aufbaumaterial (13) mit
einer Beschichtungsvorrichtung (12-14) zum Aufbringen einer Schicht des Aufbaumaterials (13) auf ein Baufeld in einer Arbeitsebene (10),
einer Verfestigungsvorrichtung (20) zum selektiven Verfestigen des Aufbaumaterials (13) in der aufgebrachten Schicht und
zumindest zwei Gasdüsen (40), die am Rand des Baufelds angeordnet sind,
wobei die Gasdüsen (40) schaltbar sind in eine Funktion zum Absaugen von Gas aus der Vorrichtung (1) und in einen funktionslosen Zustand und
wobei die Vorrichtung (1) weiter eine Steuereinheit gemäß Anspruch 10 oder 11 aufweist, die die Gasdüsen (40) in Abhängigkeit von einem Betriebszustand der Vorrichtung (1) schaltet,
wobei die Gasdüsen (40) vorzugsweise zusätzlich schaltbar sind in eine Funktion zum Zuführen von Gas in die Vorrichtung (1) .

14. Vorrichtung gemäß Anspruch 13, bei der
das Baufeld in der Arbeitsebene (10) eine rechteckige Form aufweist und
zwei Gasdüsen (40b, 40d) bereitgestellt sind, die an zwei einander gegenüberliegenden Seiten des Rechtecks angeordnet sind, oder
vier Gasdüsen (40a-40d) bereitgestellt sind, von denen jede an einer Seite des Rechtecks angeordnet ist.

15. Vorrichtung (1) gemäß einem der Ansprüche 13 bis 14, bei der die Gasdüsen (40) jeweils so ausgebildet und/oder ansteuerbar sind, dass eine Geschwindigkeit eines durch sie hervorgerufenen Gasstroms auf der Höhe der Arbeitsebene (10) am geringsten ist.

## Claims

1. A method for controlling the direction of a gas suctioning in a device (1) for producing a three-dimensional object (2) by selectively solidifying a building material (13) layer by layer, wherein the device (1) comprises:
an application device (12-14) for applying a layer of the building material (13) to a build area in a working plane (10),
a solidification device (20) for selectively solidifying the building material (13) in the applied layer, and
at least two gas nozzles (40) which are arranged at the edge of the build area,
wherein the gas nozzles (40) can be switched into a function for suctioning gas out of the device (1) and in a functionless state and
the gas nozzles (40) are switched depending on an operating state of the device (1).

2. The method according to claim 1, in which the gas nozzles (40) are switched depending on a current solidification site.

3. The method according to claim 2, in which
a gas nozzle (40) which is closer to the current solidification site than another gas nozzle, preferably the gas nozzle (40) that is closest to the current solidification site, is switched to the function for suctioning gas.

4. The method according to claim 2 or 3, in which
the build area is divided into predetermined areas (B1-B4; B5, B6; B1a, B1b, B2a, B2b) and
the gas nozzles (40) are switched depending on which of these areas the current solidification site is located in.

5. The method according to one of claims claim 1 to 4, in which
the gas nozzles (40) are additionally switchable to a function for supplying gas into the device (1) and
at least one of the gas nozzles (40) that is/are different from the one or more gas nozzles which is/are switched to the function for suctioning gas is switched to the function for supplying gas.

6. A method for producing a three-dimensional object (2) by layer-wise applying and selectively solidifying a building material (13), comprising the steps of:
a) applying a layer of a building material (13) to a build area in a working plane (10),
b) selectively solidifying the layer of the building material (13) at locations of the respective layer that correspond to a cross section of the object (2) to be produced, and
c) repeating steps a) and b) until the object (2) is completed,
wherein during manufacture of the object a gas is sucked-off by at least one of two gas nozzles (40) which are arranged at the edge of the build area, and
a control of the direction of the gas suctioning is implemented by a method according to one of claims 1 to 5.

7. The method according to claim 6, in which
a current solidification site is controlled depending on a switching state of the gas nozzles (40).

8. The method according to one of claims 1 to 7, wherein the gas nozzles are switched during the selective solidification of a layer.

9. A computer program that can be loaded into a programmable control unit (29), having program code means to execute all steps of a method according to one of claims 1 to 5 when the computer program is run on the control unit (29).

10. A control unit (29) for a device (1) for producing a three-dimensional object (2) by selectively solidifying a building material (13) layer by layer, wherein the device comprises:
an application device (12-14) for applying a layer of the building material (13) to a build area in a working plane (10),
a solidification device (20) for selectively solidifying the building material (13) in the applied layer, and
at least two gas nozzles (40) which are arranged at the edge of the build area,
wherein the gas nozzles (40) can be switched into a function for suctioning gas out of the device (1) and into a functionless state, and
the control unit (29) is configured to switch the gas nozzles (40) depending on an operating state of the device (1) in order to carry out a method for controlling the direction of the gas suctioning according to one of claims 1 to 5.

11. The control unit (29) according to claim 10, which is further configured to control or regulate the solidification device (20) to define the solidification site.

12. A retrofit kit for a device (1) for producing a three-dimensional object (2) by selectively solidifying a building material (13) layer by layer, wherein the retrofit kit comprises:
at least two gas nozzles (40) and
a control unit (29) according to claim 10 or 11.

13. A device (1) for producing a three-dimensional object (2) by selectively solidifying a building material (13) layer by layer, having
an application device (12-14) for applying a layer of the building material (13) to a build area in a working plane (10),
a solidification device (20) for selectively solidifying the building material (13) in the applied layer, and
at least two gas nozzles (40) which are arranged at the edge of the build area, wherein the gas nozzles (40) can be switched into a function for suctioning gas out of the device (1) and into a functionless state, and
wherein the device (1) further comprises a control unit according to claim 10 or 11 that switches the gas nozzles (40) depending on an operating state of the device (1),
wherein the gas nozzles (40) are preferably further switchable into a function for supplying gas into the device (1).

14. The device according to claim 13, wherein
the build area in the working plane (10) has a rectangular shape and
two gas nozzles (40b, 40d) are provided, which are arranged on two opposite sides of the rectangle, or
four gas nozzles (40a-40d) are provided, each of which is arranged on one side of the rectangle.

15. The device (1) according to one of claims 13 to 14, wherein the gas nozzles (40) each are designed and/or can be actuated such that a speed of a gas stream generated by them is lowest at the level of the working plane (10).

## Revendications

1. Procédé destiné à commander la direction d'une aspiration de gaz dans un dispositif (1) pour fabriquer un objet (2) tridimensionnel par solidification sélective par couches d'un matériau de construction (13), dans lequel le dispositif (1) comprend :
un dispositif d'enduction (12-14) pour appliquer une couche du matériau de construction (13) sur un champ de construction dans un plan de travail (10),
un dispositif de solidification (20) pour solidifier sélectivement le matériau de construction (13) dans la couche appliquée et
au moins deux buses à gaz (40) qui sont agencées au bord du champ de construction,
dans lequel les buses à gaz (40) peuvent être commutées dans une fonction pour aspirer un gaz hors du dispositif (1) et dans un état sans fonction et
les buses à gaz (40) sont commutées en fonction d'un état de fonctionnement du dispositif (1).

2. Procédé selon la revendication 1, dans lequel les buses à gaz (40) sont commutées en fonction d'un emplacement de solidification actuel.

3. Procédé selon la revendication 2, dans lequel
une buse à gaz (40) qui se situe plus près de l'emplacement de solidification actuel qu'une autre buse à gaz, de préférence la buse à gaz (40) qui se situe au plus près de l'emplacement de solidification actuel, est commutée dans la fonction pour aspirer un gaz.

4. Procédé selon la revendication 2 ou 3, dans lequel
le champ de construction est subdivisé en zones prédéterminées (B1-B4, B5, B6 ; B1a, B1b, B2a, B2b) et
les buses à gaz (40) sont commutées en fonction de la zone parmi ces zones dans laquelle se trouve l'emplacement de solidification actuel.

5. Procédé selon l'une des revendications 1 à 4, dans lequel
les buses à gaz (40) peuvent être commutées en complément dans une fonction pour amener un gaz dans le dispositif (1) et
au moins une des buses à gaz (40), qui sont différentes de la buse à gaz ou des buses à gaz qui est ou sont commutée(s) dans la fonction pour aspirer un gaz, est commutée dans la fonction pour amener un gaz.

6. Procédé destiné à fabriquer un objet (2) tridimensionnel par application par couches et solidification sélective d'un matériau de construction (13) avec les étapes consistant à :
a) appliquer une couche d'un matériau de construction (13) sur un champ de construction dans un plan de travail (10),
b) solidifier sélectivement la couche du matériau de construction (13) en des emplacements de la couche respective qui correspondent à une coupe transversale de l'objet (2) à fabriquer, et
c) répéter les étapes a) et b) jusqu'à ce que l'objet (2) soit finalisé,
dans lequel, pendant la fabrication de l'objet, un gaz est aspiré par au moins l'une de deux buses à gaz (40) qui sont agencées au bord du champ de construction, et
une commande de la direction de l'aspiration de gaz se produit avec un procédé selon l'une des revendications 1 à 5.

7. Procédé selon la revendication 6, dans lequel
un emplacement de solidification actuel est commandé en fonction d'un état de commutation des buses à gaz (40).

8. Procédé selon l'une des revendications 1 à 7, dans lequel les buses à gaz sont commutées pendant la solidification sélective d'une couche.

9. Programme informatique, qui peut être chargé dans une unité de commande (29) programmable, avec des moyens de code de programme pour exécuter toutes les étapes d'un procédé selon l'une des revendications 1 à 5 lorsque le programme informatique est exécuté sur l'unité de commande (29).

10. Unité de commande (29) pour un dispositif (1) destiné à fabriquer un objet (2) tridimensionnel par solidification sélective par couches d'un matériau de construction (13), dans lequel le dispositif comprend :
un dispositif d'enduction (12-14) pour appliquer une couche du matériau de construction (13) sur un champ de construction dans un plan de travail (10),
un dispositif de solidification (20) pour solidifier sélectivement le matériau de construction (13) dans la couche appliquée et
au moins deux buses à gaz (40) qui sont agencées au bord du champ de construction,
dans lequel les buses à gaz (40) peuvent être commutées dans une fonction pour aspirer un gaz hors du dispositif (1) et dans un état sans fonction et
l'unité de commande (29) est conçue pour commuter les buses à gaz (40) en fonction d'un état de fonctionnement du dispositif (1), afin d'exécuter un procédé destiné à commander la direction de l'aspiration de gaz selon l'une des revendications 1 à 5.

11. Unité de commande (29) selon la revendication 10, qui, en plus de commander ou réguler le dispositif de solidification (20), est conçue pour solidifier l'emplacement de solidification.

12. Bloc de rattrapage pour un dispositif (1) destiné à fabriquer un objet (2) tridimensionnel par solidification sélective par couches d'un matériau de construction (13), dans lequel le bloc de rattrapage comprend :
au moins deux buses à gaz (40) et
une unité de commande (29) selon la revendication 10 ou 11.

13. Dispositif (1) destiné à fabriquer un objet (2) tridimensionnel par solidification sélective par couches d'un matériau de construction (13) avec
un dispositif d'enduction (12-14) pour appliquer une couche du matériau de construction (13) sur un champ de construction dans un plan de travail (10),
un dispositif de solidification (20) pour solidifier sélectivement le matériau de construction (13) dans la couche appliquée et
au moins deux buses à gaz (40) qui sont agencées au bord du champ de construction,
dans lequel les buses à gaz (40) peuvent être commutées dans une fonction pour aspirer un gaz hors du dispositif (1) et dans un état sans fonction et
dans lequel le dispositif (1) présente en outre une unité de commande selon la revendication 10 ou 11, qui commute les buses à gaz (40) en fonction d'un état de fonctionnement du dispositif (1),
dans lequel les buses à gaz (40) peuvent de préférence être commutées en complément dans une fonction pour amener un gaz dans le dispositif (1).

14. Dispositif selon la revendication 13, dans lequel
le champ de construction présente une forme rectangulaire dans le plan de travail (10) et
deux buses à gaz (40b, 40d) sont fournies qui sont agencées sur deux côtés opposés l'un à l'autre du rectangle, ou
quatre buses à gaz (40a-40d) sont fournies dont chacune est agencée sur un côté du rectangle.

15. Dispositif (1) selon l'une des revendications 13 à 14, dans lequel les buses à gaz (40) sont conçues et/ou peuvent être commandées respectivement de telle sorte qu'une vitesse d'un flux gazeux provoqué par celles-ci soit au plus bas à la hauteur du plan de travail (10).
